# EUROPEAN PATENT APPLICATION

(11) **EP 4 317 858 A1**
(43) Date of publication of application: **07.02.2024**
(21) Application number: 22188146.9
(22) Date of filing: 01.08.2022
(51) Int. Cl.: F25B 41/40, B60H 1/00, B60H 1/32, G10K 11/16

(54) **REFRIGERANT MODULE FOR THERMAL MANAGEMENT SYSTEM**

(71) Applicant: VALEO SYSTEMES THERMIQUES, 78320 Le Mesnil Saint-Denis (FR)
(72) Inventor: FIENE, Andreas, 96476 Bad Rodach (DE)
(74) Representative: Valeo Systèmes Thermiques

(57) **Abstract**

The invention is about a refrigerant module for a thermal management system, comprising a refrigerant unit of two plates (2, 3) shaped to constitute channels for distributing refrigerant fluid in said thermal management system, at least one of the channels, called acoustic channel (4a), comprising at least one muffler (10) formed at least partially by at least one plate (2, 3) of said refrigerant unit.

## Description

This disclosure relates to a refrigerant module for a thermal management system.

### Background Art

The development of electric vehicles has brought new issues to the automotive field, in particular in view of the limited autonomy of the electric battery as well as the limited space that can be dedicated to the thermal management system at the bottom of the vehicles. For these reasons, it is more and more searched for compact and light thermal management systems.

### Summary

This disclosure improves the situation.

It is proposed a refrigerant module for a thermal management system, comprising a refrigerant unit of two plates shaped to constitute channels for distributing refrigerant fluid in said thermal management system, at least one of the channels, called acoustic channel, comprising at least one muffler formed at least partially by at least one plate of said refrigerant unit.

Thanks to the integration of the muffler in the plates of the refrigerant module, the thermal management system is guaranteed to be more compact and lighter than in the state of the art, while ensuring reduction of noise and gas pulsation that are generated by a compressor of the thermal management system.

In another aspect, the muffler is formed by one plate of the refrigerant unit.

In another aspect, the muffler is formed by the two plates of the refrigerant unit.

In another aspect, the muffler has a general shape of a trapeze, or a cylinder or a parallelepiped or an ellipsoid.

In another aspect, the acoustic channel is a discharge channel of the refrigerant module.

In another aspect, the acoustic channel is a suction channel.

In another aspect, the muffler comprises a box fixed to the acoustic channel.

In another aspect, the muffler is completely formed by at least one plate of the refrigerant unit.

In another aspect, the muffler comprises a chamber provided with a refrigerant inlet and a refrigerant outlet in the acoustic channel, a square section of the refrigerant inlet, called inlet section, being of the same order of a square section of the refrigerant outlet, called outlet section.

In another aspect, a square section of the chamber is larger the inlet section or the outlet section.

In another aspect, the muffler is casted or shaped or forced or machined or stamped in at least one plate of the refrigerant unit.

The invention also relates to a method of manufacturing a refrigerant module for a thermal management system, the refrigerant module comprising two connected plates being shaped to constitute channels for distributing refrigerant fluid in said thermal management unit, the method comprising a step of forming at least one muffler at least partially by at least one plate of said refrigerant unit.

In another aspect, the step of forming at least one muffler comprises casting or shaping or forcing or machining or stamping at least one of the two plates of the refrigerant unit.

The invention also relates to a thermal management system comprising a refrigerant module and a fluid source in fluid communication with and attached to the refrigerant module, the fluid source including at least one of a condenser, a chiller, a receiver-drier, a compressor or a coolant container

### Brief Description of Drawings

Other features, details and advantages will be shown in the following detailed description and on the figures, on which:
**Fig. 1**

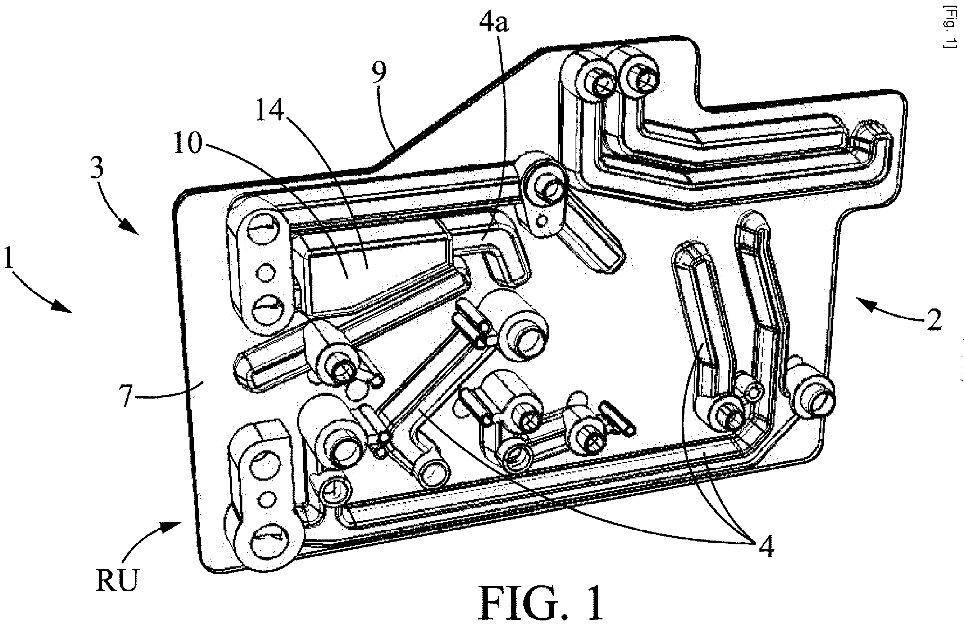

   [Fig. 1] is a perspective view of a refrigerant module according to an embodiment of the present disclosure.
**Fig. 2**

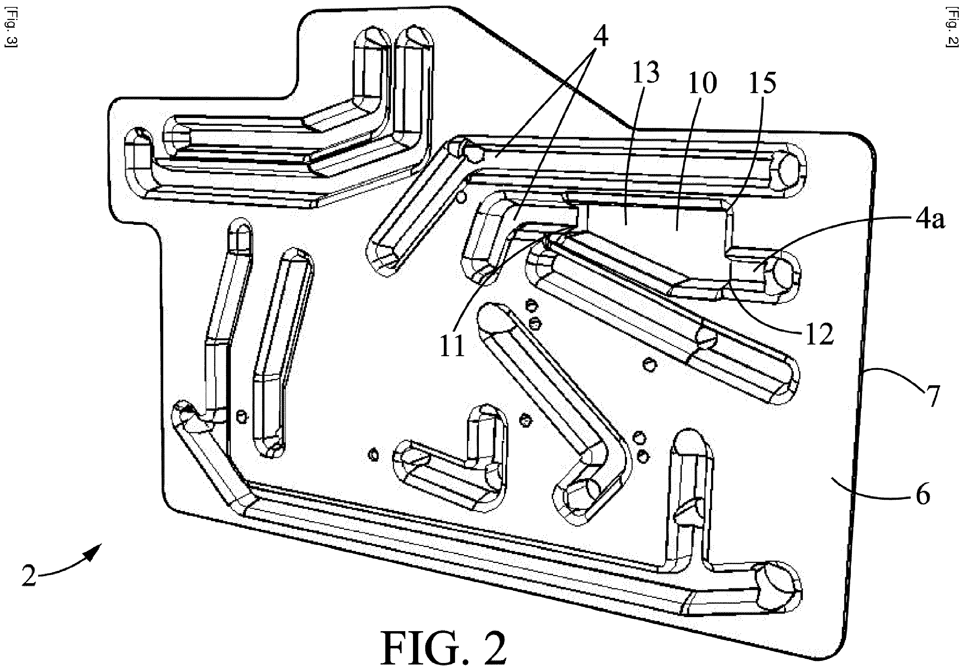

   [Fig. 2] is a perspective view of a refrigerant plate of a refrigerant module according to an embodiment.
**Fig. 3**

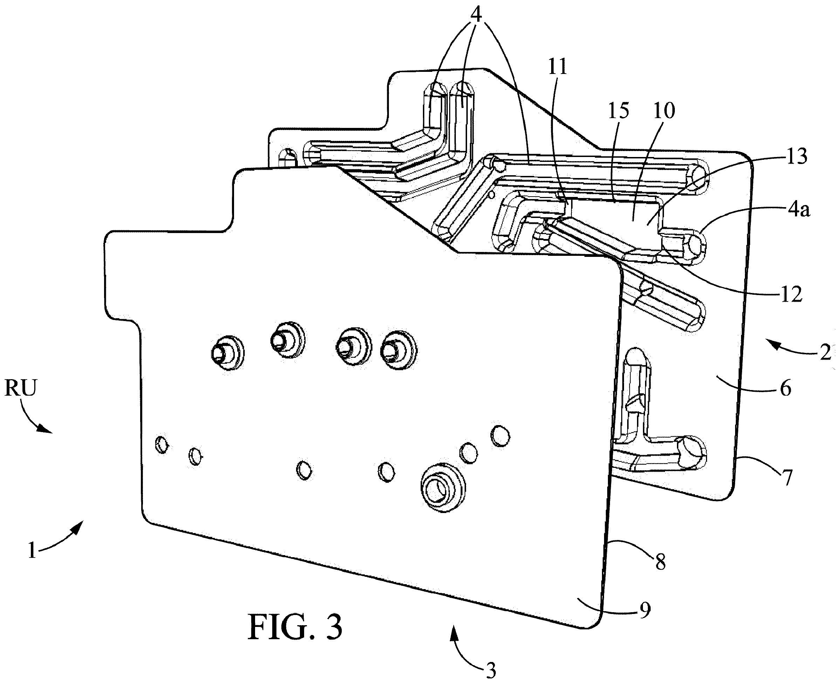

   [Fig. 3] is a perspective view of a refrigerant module according to an embodiment.
**Fig. 4**

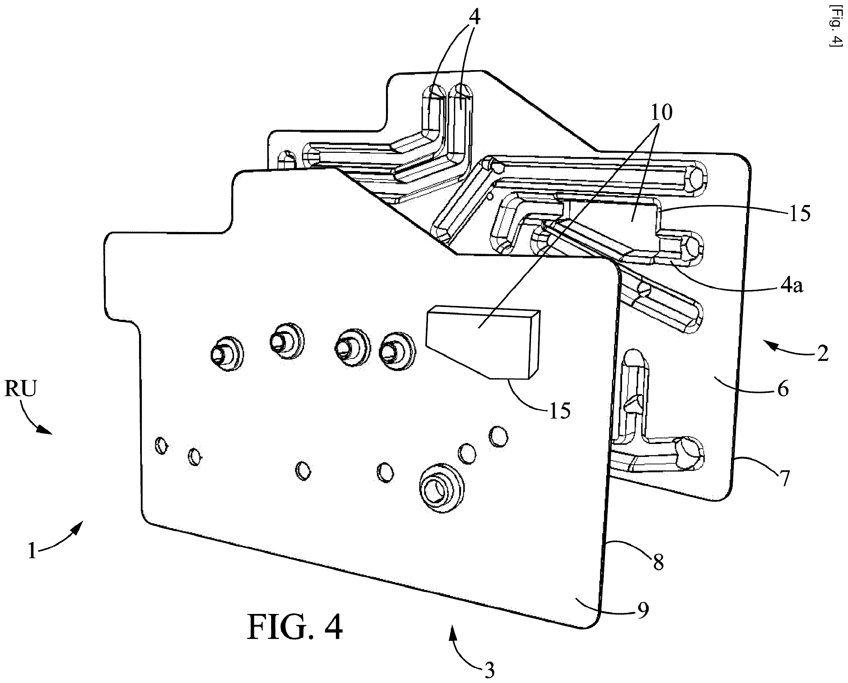

   [Fig. 4] is a perspective view of a refrigerant module according to an embodiment.
**Fig. 5**

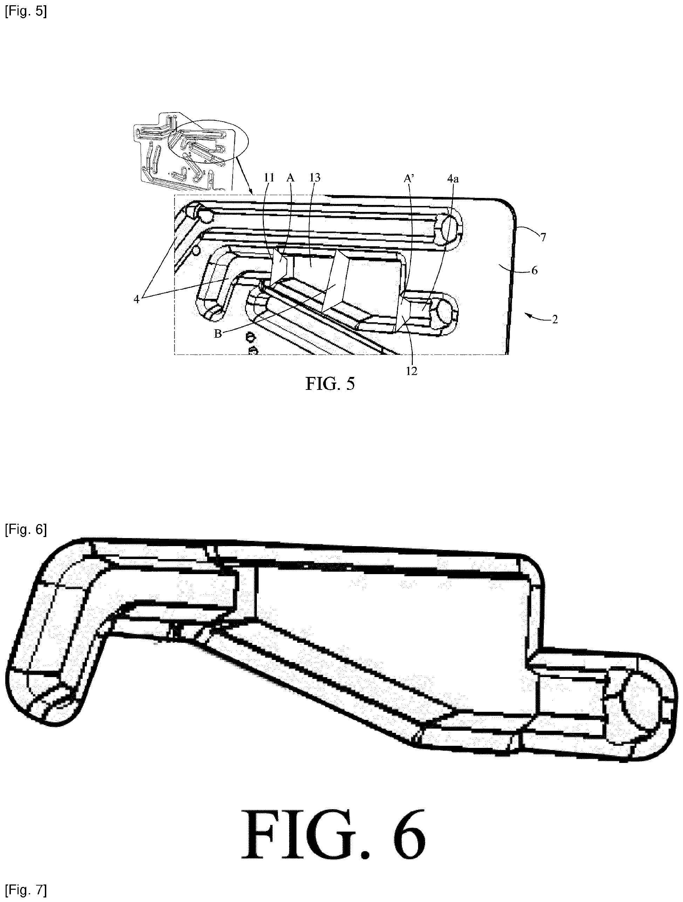

   [Fig. 5] is a view of details of the refrigerant plate of figure 2.
**Fig. 6**
   [Fig. 6] is a perspective view of a muffler of the refrigerant module any of the preceding figures according to an alternative.
**Fig. 7**

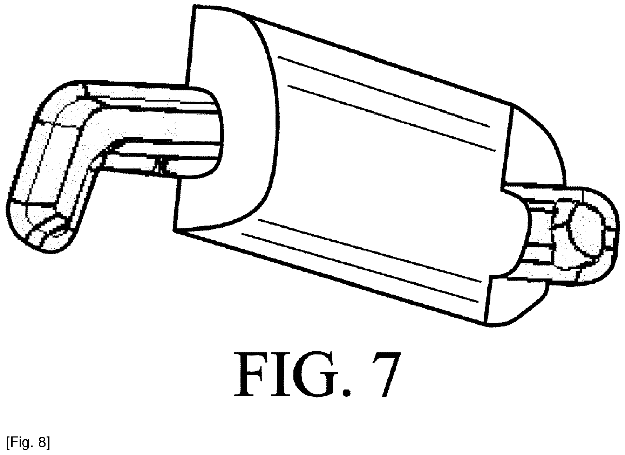

   [Fig. 7] is a perspective view of a muffler of the refrigerant module of any of the preceding figures according to another alternative.
**Fig. 8**

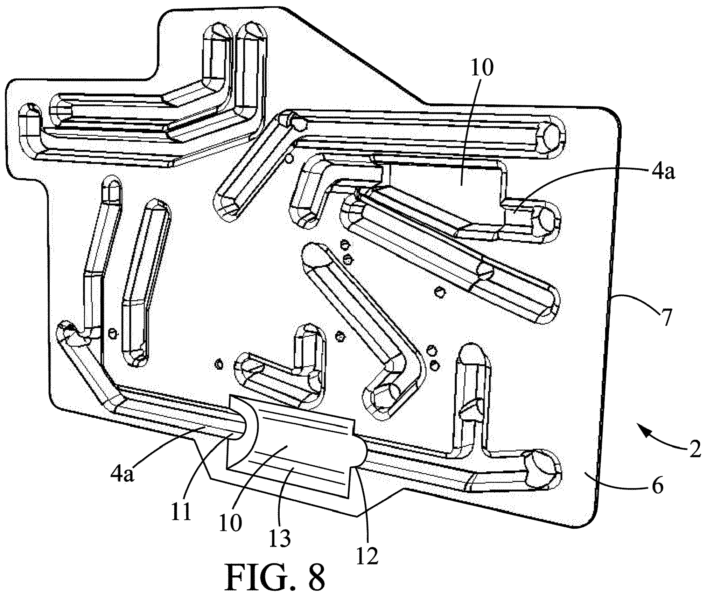

   [Fig. 8] is perspective view of a refrigerant plate of a refrigerant module according to another embodiment.

### Description of Embodiments

The present invention relates to a refrigerant module for a thermal management system, referred to as 1 in the figures. The refrigerant module comprises a refrigerant unit RU of a first plate 2 and a second plate 3, the two plates facing each other and fixed together.

The first plate 2 comprises channel tracks 4 and is later called refrigerant plate 2. The second plate 3 is essentially flat and is later called back plate 3. The refrigerant plate 2 and the back plate 3 are sealed together to delimit a closed space and to form the channels of the refrigerant module 1. The channels ensure distribution of the refrigerant fluid in components of the thermal management system, like a compressor, an evaporator and a condenser (not shown).

Different components of the thermal management system can be attached to the refrigerant unit RU like at least: a condenser and/or a water condenser and/or a heat exchanger (evaporator and/or chiller) and/or PT (pressure temperature) sensors, and/or valves and/or AC (air conditioning) lines.

The refrigerant plate 2 comprises an inner side 6 and an outer side 7, cavities from the inner side 6 forming the channel tracks 4. The back plate 3 comprises an inner side 8 and an outer side 9. In the module 1, the inner side 6 of the refrigerant plate 2 is disposed opposite to the inner side 8 of the back plate 3.

As can be seen from the figures, the refrigerant module 1 integrates a muffler 10 to reduce noise and gas pulsation from the compressor (not shown) of the thermal management system. The muffler is disposed within one channel of the refrigerant unit, called acoustic channel, 4a.

The integration of the muffler 10 to the refrigerant unit RU ensures the thermal management to be more compact and with less weight.

The muffler 10 is formed at least partially by at least one of the refrigerant plate 2 and the back plate 3. The muffler 10 comprises a refrigerant inlet 11, a refrigerant outlet 12 and a chamber 13 in between.

In figure 1, the muffler 10 is formed partially by the refrigerant unit RU and comprises an insert 14 fixed to the acoustic channel 4a. In other words, in figure 1, the muffler 10 can be defined as a box attached to the acoustic channel. This embodiment guarantees a simple process of manufacturing as well as an adaptability to any refrigerant unit.

In figures 2 to 8, the muffler 10 is completely formed by the refrigerant unit RU. In other words, the muffler 10 is integrally constituted by deformations 15 in the refrigerant plate 2 and/or the back plate 3. This embodiment guarantees a simple process of manufacturing and avoids any additional part, any additional sealing elements and any additional step of manufacturing.

In figure 3, only the refrigerant plate 2 comprises deformations 15 while in figure 4, both the refrigerant plate 2 and the back plate 3 comprises deformations 15.

The muffler 10 can be casted or shaped or forced or machined or stamped in at least one plate of the refrigerant unit. In other words, the deformations 15 are integral to the natural shape of the plates 2, 3.

As best seen from figure 5, a square section A of the refrigerant inlet 11 is of the same order as a square section A' of the refrigerant outlet 12, preferably, A being equal to A'. On the other hand, a square section B of the chamber 13 is strictly larger than A, A'. The sharp increase of the square section (from A to B) followed by the sharp decrease of the square section (from B to A') reduces gas pulsations from the compressor, hence, the noise generated by the compressor.

The muffler 10 can be of different shapes. It can be of the shape of a trapeze (figures 1 to 6 and 8), of a half-cylinder or a cylinder (figures 6 and 7) or of a parallelepiped or of an ellipsoid, depending on the amplitude and the frequency one wants to damp from the pulsations of the compressor.

The acoustic channel 4a can be in a discharge channel (figures 1 to 5) or a suction channel (figure 8). Also, the refrigerant module 1 can comprise a plurality of mufflers 10, as illustrated in figure 8.

The method of manufacturing is now described.

The method of manufacturing the refrigerant module 1 comprises a step of forming a muffler at least partially by at least one of the refrigerant plate 2 and the back plate 3 of the refrigerant unit in the acoustic channel 4a.

When the muffler comprises the box, the method of manufacturing comprises a step of fixing the insert 14, for instance by brazing or welding.

When the muffler is fully integrated into the plates 2, 3, the method of manufacturing comprises a step of forming the deformations 15 by casting or shaping or forcing or machining or stamping at least one of the two plates of the refrigerant unit.

## Claims

1. Refrigerant module for a thermal management system, comprising a refrigerant unit of two plates (2, 3) shaped to constitute channels for distributing refrigerant fluid in said thermal management system, at least one of the channels, called acoustic channel (4a), comprising at least one muffler (10) formed at least partially by at least one plate (2, 3) of said refrigerant unit.

2. Refrigerant module according to claim 1, wherein the muffler (10) is formed by one plate of the refrigerant unit.

3. Refrigerant module according to claim 1, wherein the muffler (10) is formed by the two plates of the refrigerant unit.

4. Refrigerant module according to any of the preceding claims, wherein the muffler (10) has a general shape of a trapeze, or a half-cylinder or a cylinder or a parallelepiped or an ellipsoid.

5. Refrigerant module according to any of the preceding claims, wherein the muffler (10) comprises a box.

6. Refrigerant module according to any of the claims 1-5, wherein the muffler (10) is completely formed by at least one plate of the refrigerant unit.

7. Refrigerant module according to any of the preceding claims, wherein the muffler (10) comprises a chamber (13) provided with a refrigerant inlet (11) and a refrigerant outlet (12) in the acoustic channel (4a), a square section of the refrigerant inlet (11), called inlet section (A), being of the same order of a square section of the refrigerant outlet (12), called outlet section (A').

8. Refrigerant module according to the preceding claim, wherein a square section (B) of the chamber (13) of the muffler (10) is larger the inlet section (A) or the outlet section (A').

9. Refrigerant module according to any of the preceding claims, wherein the muffler is casted or shaped or forced or machined or stamped in at least one plate of the refrigerant unit.

10. Method of manufacturing a refrigerant module for a thermal management system, the refrigerant module comprising two connected plates (2, 3) being shaped to constitute channels for distributing refrigerant fluid in said thermal management unit, the method comprising a step of forming at least one muffler (10) at least partially by at least one plate of said refrigerant unit.

11. Method according to the preceding claim, wherein the step of forming at least one muffler (10) comprises casting or shaping or forcing or machining or stamping at least one of the two plates (2, 3) of the refrigerant unit.

12. Thermal management system comprising a refrigerant module according to any of the preceding claims, and a fluid source in fluid communication with and attached to the refrigerant module, the fluid source including at least one of a condenser, a chiller, a receiver-drier, a compressor or a coolant container.
